Europäisches Patentamt

(19) European Patent Office

Office européen des brevets

(11) Publication number: **0 280 666 B1**

## (12) EUROPEAN PATENT SPECIFICATION

(45) Date of publication of patent specification :
08.05.91 Bulletin 91/19

(51) Int. Cl.⁵ : **A01C 15/04**, A01M 7/00, A01B 59/043

(21) Application number : 88850039.4

(22) Date of filing : 01.02.88

(54) Agricultural apparatus such as fertilizer spreader, sprayer or the like.

(30) Priority : 13.02.87 SE 8700587

(43) Date of publication of application :
31.08.88 Bulletin 88/35

(45) Publication of the grant of the patent :
08.05.91 Bulletin 91/19

(84) Designated Contracting States :
DE FR GB

(56) References cited :
EP-A- 0 146 380
EP-A- 0 223 170
WO-A-84/02053
DE-A- 3 439 590
GB-A- 1 562 695

(73) Proprietor : AKTIEBOLAGET ÖVERUMS BRUK
Box 100
S-590 96 Överum (SE)

(72) Inventor : Andersson, Yngve Berntmund
Langgatan 9
S-274 00 Skurup (SE)

(74) Representative : Hagelbäck, Evert Isidor et al
c/o AB Electrolux Patentavdelningen
S-105 45 Stockholm (SE)

Jouve, 18, rue Saint-Denis, 75001 PARIS

## Description

This invention relates to an agricultural apparatus such as a fertilizer spreader, sprayer or the like being connectable to and supportable by a towing vehicle, the apparatus comprising a container for storing the material which is to be spread and booms or the like extending sideways from the container and supporting tubes which communicate with spreader means fastened to the booms.

Previously known apparatus of the above type comprise a central unit with a container for the material to be spread or sprayed. From this unit booms provided with nozzle means extend perpendicular to the driving direction. The apparatus can either be provided with a chassis and supporting wheels and be towed by a vehicle or have no chassis and wheels and instead be supported by the vehicle. In both cases the track width is small compared to the total working width and the movements that are created a the booms and in particular at its outer ends are considerable when the wheels of the apparatus or the towing vehicle are passing irregularities in the ground. These movements mean great inconvenience. Great stress is created in the booms and at the joining parts in the central unit which means risk for damages. The material which is to be spread is also irregularly distributed buring these movements.

Spring support and damping of the booms which is a method used on some machines have prooved to be insufficient. On other machines the problem has been solved by forming a rigid unit out of the two booms when they are extended in working position. This unit is supported at a point which has the possibility to move about a horizontal axis which is parallell to the driving direction. Different embodiments excist see for instance British patent application No. 2028078.

If these systems are used on a apparatus which is supported by a towing vehicle the booms have to be placed behind the central unit which makes filling of the container troublesome. In order to facilitate filling as much as possible the booms should instead be placed at the sides of the container.

The purpose of this invention is to achieve an apparatus of the type described above this apparatus being supported by the towing vehicle and being so designed that rapid movements of the towing vehicle are not directly converted into a corresponding movement of the booms. At the same time the arrangement according to the invention allows the booms to follow a more permanent inclination of the towing vehicle for instance when driving on a sloope. This is achieved by device which has received the characteristics mentioned in the claims.

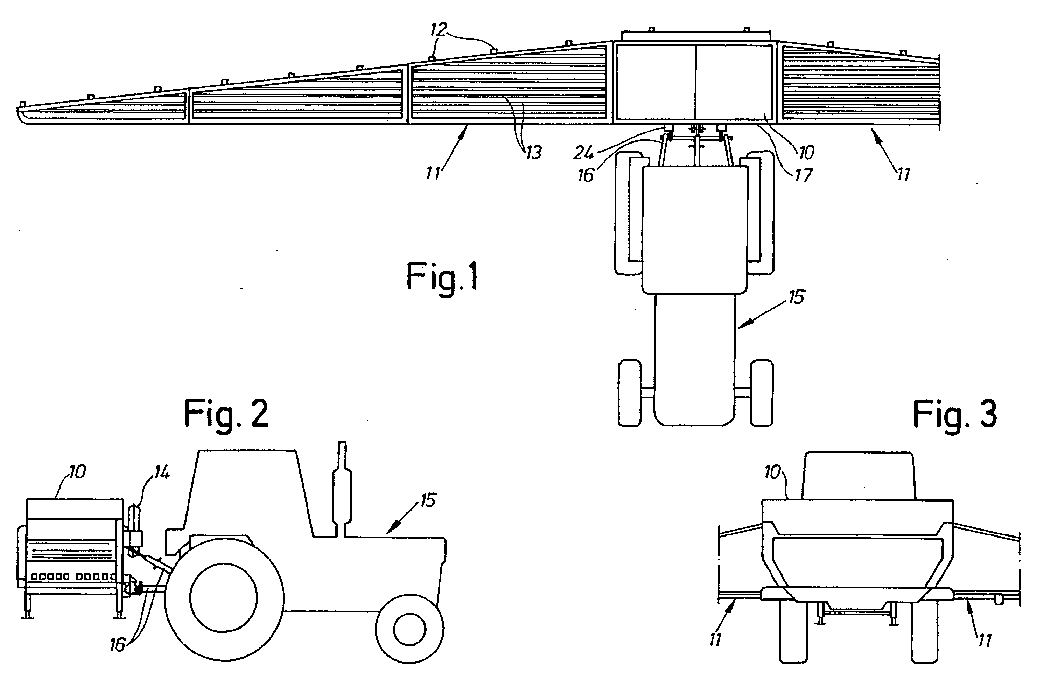

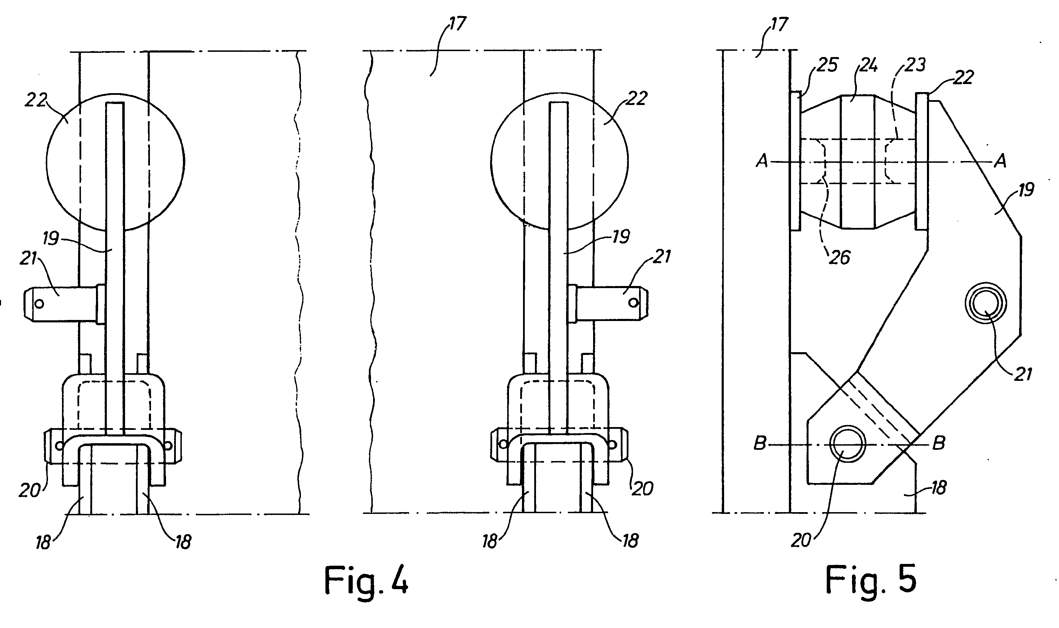

An embodiment of the invention will now be described with reference to the accompanying drawings where fig. 1 in a plan view shows a towing vehicle with an apparatus of the actual type, fig. 2 and 3, show the apparatus from the side and from the rear respectively whereas fig. 4 is a side elevation view of the support device for the apparatus and fig. 5 is a side elevation view of the same support device.

As appears from the figures the apparatus comprises a container 10 in which the material to be spread is stored. This container on each side supports extensions in the form of booms 11 extending horizontally outwards in its working positions. The booms which are divided into sections are in a conventional manner folded together during transport but in extended position they together with the container 10 form a rigid unit. The booms are provided with several nozzles 12 which via tubes 13 communicate with a common feed device, not shown, for transferring the material from the container into the tubes. The apparatus also has a fan 14 which creates an air stream by means of which the material is transported from the feed device through the tubes to the nozzles. The apparatus is supported by a towing vehicle 15 by a conventional three point support 16.

The container is on its vertical front wall 17 provided with two pairs of brackets 18 on which two arms 19 are turnably secured by means of shafts 20. These arms each have a support shaft 21 to be joint to the fastening device of the towing vehicle. The upper part of the arm 19 has a circular plate 22 with a central pin 23. The plate 22 abuts a rubber sleeve 29 which also abuts a plate 25 fixed to the container wall 17 and having a central pin 26. The rubber sleeve 24 is thus clamped between the container wall 17 and the arm 19. The support shaft 21 is placed between a central line A through the rubber sleeve and a line B which is paralell to the line A through the shafts 20 of the arm. The support shaft 21 is moreover placed in front of the turning shafts 20.

By this arrangement the distance between the boom tips and the ground is mainly constant i.e. the complete unit follows the inclination of the ground since the towing vehicle follows this inclination. If however the towing vehicle is due to rapid movements when driving on irregular ground this only means that these movements are taken up as changes of the distance between the upper part of the arms and the container wall i.e. as a compression work by the rubber sleeves. If the rear wheel on one side of the towing vehicle should rapidly sink down into a hole in the ground the load on the support shaft 21 on this side will decrease and be forced forwards, downwards by the spring means. At the same side the boom achieves a movement backwards, upwards with respect to the towing vehicle. The movement of the boom on the other side becomes the opposite. In practice this means that the apparatus with the booms mainly keeps it position in the horizontal plane.

## Claims

1. Agricultural apparatus such as fertilizer spreader, sprayer or the like and being connectable to and supportable by a towing vehicle (15) the apparatus cpmprising a container (10) for storing the material which is to be spread and booms (11) extending sideways from the container and supporting tubes (13) which communicate with spreader means fastened to the booms, **characterized** in that the container (10) and the booms (11) together form a rigid unit which at its front part has at least two from each other perpendicularly separated arms (19), which are turnably secured into the unit about a horizontal axis (20) perpendicular to the driving direction, spring means (22) being fastened between the arms (19) and the unit, each arm having a support shaft (21) which is adapted to be fastened on and supported by the towing vehicle, the support shaft (21) – vertically seen – being placed between the spring means (24) and the horizontal turning axis (20).

2. Apparatus according to claims 1, **characterized** in that the support shaft (21) is placed in front of the turning axis (20).

3. Apparatus according to any one of the preceding claims, **characterized** in that the spring means (24) comprise a rubber element.

4. Apparatus according to claim 3, **characterized** in that the rubber element comprises a sleeve which is fastened between a pin (23, 26) on the arm and on the container (10).

5. Apparatus according to any one of the preceding claims, **characterized** in that the unit has an additional fastening point for the towing vehicle.

## Ansprüche

1. Landwirtschaftliches Gerät, z.B. Düngerstreuer, Sprüher od.dgl., das an ein Schleppfahrzeug (15) anbaubar und an dieser abstützbar ist, welches Gerät einen Vorratsbehälter (10) für das zu verteilende Material und vom Behälter zur Seite ragende Ausleger (11) und Stützrohre (13) aufweist, die mit an den Auslegern befestigten Verteilerelementen kommunizieren, dadurch gekennzeichnet, daß der Behälter (10) und die Ausleger (11) miteinander eine starre Einheit bilden, die an ihrem Vorderteil zumindest zwei voneinander senkrecht getrennte Arme (19) aufweist, die in der Einheit um eine zur Fahrtrichtung senkrechte, horizontale Achse (20) schwenkbar befestigt sind, wobei Federelememte (22) zwischen den Armen (19) und der Einheit befestigt sind, jeder Arm eine Stützwelle (21) aufweist, die an dem Schleppfahrzeug befestigbar und abstützbar ist, wobei die Stützwelle (21), vertikal betrachtet, zwischen Federelement (24) und horizontaler Schwenkachse (20) angeordnet ist.

2. Vorrichtung nach Anspruch 1, dadurch gekennzeichnet, daß die Stützwelle (21) vor der Schwenkachse (20) angeordnet ist.

3. Vorrichtung nach einen der vorhergehenden Ansprüche, dadurch gekennzeichnet, daß das Federelement (24) ein Gummielement umfaßt.

4. Vorrichtung nach Anspruch 3, dadurch gekennzeichnet, daß das Gummielement eine Hülse umfaßt, die zwischen einem Zapfen (23, 26) am Arm und am Behälter (10) befestigt ist.

5. Vorrichtung nach einem der vorhergehenden Ansprüche, dadurch gekennzeichnet, daß die Einheit einen zusätzlichen Befestigungspunkt für das Schleppfahrzeug aufweist.

## Revendications

1. Machine agricole, telle qu'une épandeuse d'engrais, un pulvérisateur ou analogue, apte à être relié à un véhicule tracteur (15), et soutenu par celui-ci, cette machine comprenant un conteneur (10) pour emmagasiner la matière à épandre, et des bras (11) s'étendant latéralement depuis le conteneur et portant des tuyaux (13) qui communiquent avec des moyens d'épandage fixés sur les bras, caractérisée en ce que le conteneur (10) et les bras (11) forment un ensemble rigide qui comporte, à sa partie avant, au moins deux leviers (19) perpendiculairement espacés l'un de l'autre, qui sont articulés sur l'ensemble autour d'axes horizontaux (20) perpendiculaires au sens de déplacement, des moyens élastiques (22) étant fixés entre les leviers (19) et l'ensemble, chaque levier comportant un axe de support (21) qui est adapté pour être fixé sur le véhicule tracteur, et soutenu par celui-ci, l'axe de support (21) – considéré verticalement – étant placé entre le moyen élastique (24) et l'axe d'articulation horizontal (20).

2. Machine suivant la revendication 1, caractérisée en ce que l'axe de support (21) est placé en face de l'axe d'articulation (20).

3. Machine suivant l'une des revendications précédentes, caractérisée en ce que les moyens élastiques (24) sont constitués par un organe en caoutchouc.

4. Machine suivant la revendication 3, caractérisée en ce que l'organe en caoutchouc est un manchon qui est fixé entre un bossage (23,26) sur le levier et sur le conteneur (10).

5. Machine suivant l'une quelconque des revendications précédentes, caractérisée en ce que l'ensemble comporte un point de fixation supplémentaire pour le véhicule tracteur.

Fig. 1

Fig. 2

Fig. 3

Fig. 4

Fig. 5

EP 0 280 666 B1